# EUROPEAN PATENT APPLICATION

(11) **EP 4 757 322 A1**
(43) Date of publication of application: **10.06.2026**
(21) Application number: 25200210.0
(22) Date of filing: 04.09.2025
(51) Int. Cl.: H04N 21/414, H04N 21/472

(54) **APPLICATION INTERACTION METHOD AND APPARATUS, ELECTRONIC DEVICE, AND STORAGE MEDIUM**

(30) Priority: 04.12.2024 CN 202411775442
(71) Applicant: Beijing Zitiao Network Technology Co., Ltd., Beijing 100190 (CN)
(72) Inventor: CAO, Peiyue, Beijing, 100028 (CN)
(74) Representative: Marks & Clerk LLP

(57) **Abstract**

Embodiments of the present disclosure provide an application interaction method and apparatus, an electronic device, and a storage medium, wherein a media object is played in a video playback interface based on an information stream in a first application, where a target control is provided in the video playback interface, and the target control dynamically displays a corresponding control icon based on a video feature of the media object; switching to a secondary operation interface of the first application is performed in response to a trigger operation for the target control, where the secondary operation interface is configured at least for displaying a media player or switching to a second application, the second application being configured for acquiring background music or a video template of the media object.

## Description

### TECHNICAL FIELD

Embodiments of the present disclosure relate to the field of Internet technologies, and in particular to an application interaction method and apparatus, an electronic device, and a storage medium.

### BACKGROUND

Currently, information stream (feed)-based video playback mode and video application (APP), by virtue of their advantages such as personalized recommendations and efficient operation, have become one of the mainstream ways for users to watch videos. Especially, for playback of short videos, such video playback mode that is continuously updated and dynamically pushed effectively improves user experience.

However, for long videos or special types of videos pushed in the above feed-based video application, effective information in the videos is usually expressed mainly through audio content, while the image content in video images changes little.

### SUMMARY

Embodiments of the present disclosure provide an application interaction method and apparatus, an electronic device, and a storage medium, to overcome the problems of inefficient information transmission, power consumption waste of a terminal device, affecting user experience.

According to a first aspect, an embodiment of the present disclosure provides an application interaction method, the method includes:

playing a media object in a video playback interface based on an information stream in a first application, where a target control is provided in the video playback interface, and the target control dynamically displays a corresponding control icon based on a video feature of the media object; and switching to a secondary operation interface of the first application in response to a trigger operation for the target control, where the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object, interface content of the secondary operation interface corresponds to the control icon.

According to a second aspect, an embodiment of the present disclosure provides an application interaction apparatus, the apparatus includes:

a playback module configured to play a media object in an information-steam-based video playback interface of a first application, where a target control is provided in the video playback interface, and the target control dynamically displays a corresponding control icon based on a video feature of the media object; and

a response module configured to switch to a secondary operation interface of the first application in response to a trigger operation for the target control, where the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object, interface content of the secondary operation interface corresponds to the control icon.

According to a third aspect, an embodiment of the present disclosure provides an electronic device, including: a processor and a memory.

The memory stores computer-executable instructions;

The processor executes the computer-executable instructions stored in the memory, to cause the at least one processor to perform the application interaction method according to the first aspect and various possible designs of the first aspect.

According to a fourth aspect, an embodiment of the present disclosure provides a computer-readable storage medium storing computer-executable instructions that, when executed by a processor, cause the application interaction method according to the first aspect and various possible designs of the first aspect to be implemented.

According to a fifth aspect, an embodiment of the present disclosure provides a computer program product including a computer program, that when executed by a processor, causes the application interaction method according to the first aspect and various possible designs of the first aspect is implemented.

### BRIEF DESCRIPTION OF THE DRAWINGS

In order to describe the technical solutions in embodiments of the present disclosure or in the related art more clearly, the accompanying drawings required for describing the embodiments or the related art will be briefly described below. Apparently, the accompanying drawings in the following description are some embodiments of the present disclosure, and those of ordinary skill in the art may still derive other accompanying drawings from these accompanying drawings without paying creative efforts.
FIG. 1 is a diagram of an application scenario of an application interaction method according to an embodiment of the present disclosure;
FIG. 2 is a first schematic flowchart of an application interaction method according to an embodiment of the present disclosure;
FIG. 3 is a schematic diagram of a video playback interface according to an embodiment of the present disclosure;
FIG. 4 is a schematic diagram of a process of triggering a target control according to an embodiment of the present disclosure;
FIG. 5 is a flowchart of a specific implementation process of determining a control icon and a secondary operation interface in the embodiment of FIG. 2;
FIG. 6 is a second schematic flowchart of an application interaction method according to an embodiment of the present disclosure;
FIG. 7 is a flowchart of a specific implementation of step S206 in the embodiment shown in FIG. 6;
FIG. 8 is a schematic diagram of a process of determining a video category according to an embodiment of the present disclosure;
FIG. 9 is a structural block diagram of an application interaction apparatus according to an embodiment of the present disclosure;
FIG. 10 is a schematic structural diagram of an electronic device according to an embodiment of the present disclosure; and
FIG. 11 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without paying any creative effort shall fall in the scope of protection of the present disclosure.

It should be noted that user information (including but not limited to device information, personal information, and the like of a user) and data (including but not limited to data for analysis, stored data, presented data, and the like) related to the present disclosure are information and data authorized by the user or fully authorized by all parties, and the collection, use, and processing of relevant data need to comply with relevant laws, regulations, and standards of relevant countries and regions, for which corresponding operation entries are provided for the user to choose to authorize or deny.

An application scenario of an embodiment of the present disclosure will be explained below.

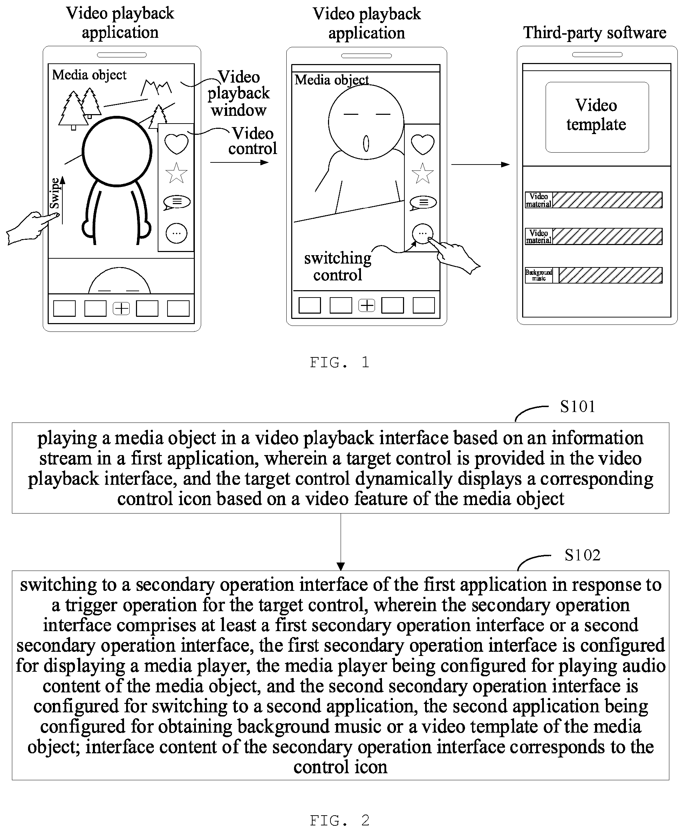

FIG. 1 is a diagram of an application scenario of an application interaction method according to an embodiment of the present disclosure. The application interaction method provided in this embodiment of the present disclosure may be applied to a video playback application (APP) having a video playback function based on an information stream, such as a short video application. More specifically, the method may be applied to an application scenario of calling a third-party video editing application in a short video application. An executive subject of this embodiment may be a terminal device that runs the above application with the video playback function based on the information stream, or another electronic device with a similar function. When the executive subject is a terminal device, the terminal device performs the method provided in this embodiment by a client running the application.

In some embodiments, the terminal device may implement the application interaction method provided in this embodiment of the present disclosure by running various computer-executable instructions or computer programs. For example, the computer-executable instructions may be program-level commands, machine instructions, or software instructions. The computer program may be a native program or a software module in an operating system. It may be a local application, that is, a program that needs to be installed in the operating system to run, or may be an applet embedded into any APP, that is, a program that runs in a browser-based environment. In conclusion, the above-mentioned computer-executable instructions may be instructions in any form, and the above-mentioned computer program may be an application, module, or plug-in in any form, specific implementations may be configured as needed. Further, in a process of implementing the application interaction method provided in this embodiment of the present disclosure, the terminal device may perform the method by running locally provided computer-executable instructions or computer programs, or by invoking computer-executable instructions or computer programs that are provided in an external server. In some embodiments, the server may be a standalone physical server, or a server cluster or distributed system including a plurality of physical servers, or a cloud server providing a cloud service, cloud storage, cloud communication, a cloud database, cloud computing, a cloud function, a network service, a middleware service, a domain name service, a security service, a content delivery network (CDN), and a basic cloud computing service such as big data and an artificial intelligence platform, the cloud service may be an interactive processing service that is called by a terminal device.

Referring to FIG. 1, taking a terminal device as an example, when the terminal device runs an application having the video playback function based on the information stream (for example, a short video application), a video playback application that runs in the terminal device communicates with a data server to obtain feed data sent by the data server, the feed data includes a media object recommended by the system, the terminal device decodes the feed data to obtain the media object, and performs video switching and playback in response to a user's operation (for example, swipe-up or swipe-down operation), thereby implementing consumption of the feed data.

In the related art, video resources in the feed-based video playback application are generally shot, produced, and posted by users, and in order to encourage the users to create videos and improve the convenience for the user to create videos, a switching entry (hereinafter referred to as a video editing entry) for quickly switching to a video editing software or a video editing function is usually provided in the video playback interface, for example, as shown in FIG. 1, a video playback interface of a feed-based video playback application includes a video playback window and a video control, the video playback window is configured for playing a media object, and the video control is configured for enabling a function of operating the media object, for example, a like function, a favorite function, or a comment function. In a possible implementation, for example, as shown in the figure, the video control is provided in the video playback window to maximize a presentation area of the video playback window; in another possible implementation, the video control may alternatively be provided outside the video playback window, which is not illustrated in this embodiment and may be set as required.

In some implementations, for example, as shown in the figure, the video control includes a switching control in addition to the common function controls such as like, favorite, and comment, tapping an icon of the switching control causes a direct or indirect switching to a third-party software such as video editing software or music software, the third-party software is configured for displaying information such as video materials, a video template, or background music used by the currently played media object, therefore, a user can listen to complete background music of the currently played media object, or create a "same-style video" with the same background music, and/or the same video materials, and/or the same video template. The above-described technical solution of providing a video editing entry in the video playback interface has become a key role in the current video production and consumption ecology on the Internet.

On this basis, during feed-based video pushing and playback in the related art, short videos with relatively short durations take precedence. When a long video with a relatively long duration occurs, video images played by the terminal device become inefficient or even ineffective information, because effective information in the long video is usually expressed mainly by audio content while the image content in the video images changes little, therefore, in the related art, the usage of a conventional video playback mode to present and play long videos leads to problems such as inefficient information transmission and power consumption waste of a terminal device. Meanwhile, directly providing a "Play audio" control in the video playback interface affects the convenience of the user switching to a third-party software through the video editing entry, increasing misoperations and reducing user operation efficiency.

In conclusion, how to play the audio content of a media object while maintaining the video editing entry in the video generation and consumption ecology is a technical problem that is currently urgent to be solved.

An embodiment of the present disclosure provides an application interaction method to solve the above problem.

Reference is made to FIG. 2. FIG. 2 is a first schematic flowchart of an application interaction method according to an embodiment of the present disclosure. The method of the embodiment may be applied to a terminal device, and the application interaction method includes the following steps.

Step S101: playing a media object in a video playback interface based on an information stream in a first application, where a target control is provided in the video playback interface, and the target control dynamically displays a corresponding control icon based on a video feature of the media object.

Step S102: switching to a secondary operation interface of the first application in response to a trigger operation for the target control, where the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object, interface content of the secondary operation interface corresponds to the control icon.

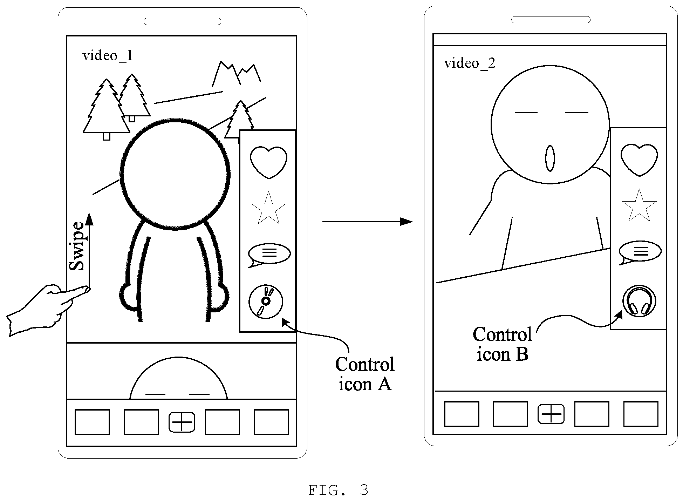

Referring to the schematic diagram of the application scenario shown in FIG. 1, in this embodiment, the application interaction method provided herein is described using a terminal device (for example, a smartphone) as an executive subject, as an example, upon running the first application, the terminal device displays an information-stream (feed)-based video playback interface first, and plays a video recommended by the feed, that is, a media object, in the feed-based video playback interface. The first application is a video playback application (APP) with a feed-based video playback function, for example, a short video style application. In a possible implementation, after the first application is started, a video playback interface is displayed as a default page, and a media object acquired from feed data is played in the video playback interface. The feed-based video playback mode belongs to the related art, and will not be described in detail here. Meanwhile, a target control is provided in the video playback interface, and a control icon of the target control, that is, the appearance of the target control, is dynamically determined based on a video feature of the currently played media object. FIG. 3 is a schematic diagram of a video playback interface according to an embodiment of the present disclosure, as shown in FIG. 3, for example, when the video playback interface plays a media object video_1 based on a feed, the control icon of the target control is a control icon A, based on the video feature of the media object video_1, more specifically, the control icon A is a "disc icon", for example; when the user switches videos in the video playback interface and a media object video _2 is played based on the feed in the video playback interface, the control icon of the target control is a control icon B based on the video feature of the media object video_2, more specifically, the control icon B is a "headphones icon", for example.

Further, in a possible implementation, after performing step S101, the terminal device can further perform the following steps:

Step S101A: adding a corresponding highlight effect to the target control based on the video feature of the media object.

As an example, based on the above description, when the video features of the media objects vary, the control icon of the target control may change accordingly, while the target control offers different trigger functions, however, in practical applications, the change in the control icon may be ignored by the user, so that the user fails to obtain the information that the trigger function of the target control has changed, thereby leading to interaction problems such as misoperation, affecting interaction efficiency. In order to solve the problem, in this embodiment, based on the above-described technical solution, the terminal device can further add a corresponding highlight effect to the control icon of the target control, based on the video feature of the media object, the highlight effect includes, for example, highlighting icon outline or changing its color, highlighting icon font or background or changing their color, changing icon size, or the like. For example, when the media object video_1 is played based on the feed in the video playback interface, the control icon of the target control is the control icon A and a "highlighting outline" highlight effect is added to the control icon A, based on the video feature of the media object video _1; when the media object video _2 is played based on the feed in the video playback interface, the control icon of the target control is the control icon B and a "highlighted dynamic rotating" highlight effect is added to the control icon B, based on the video feature of the media object video_2. In this way, the information that the trigger function of the target control has changed can be prompted, and the change in the trigger function of the target control can be noticed by the user. Therefore, subsequent interaction operations are performed as required, thereby improving the efficiency of interaction operations, and reducing misoperations.

Furthermore, the video feature of the media object may be implemented in a variety of ways. For example, the video feature is a content feature of the media object. To be specific, as the video content presented by the media object varies, the control icon of the target control changes accordingly. For another example, the video feature is a duration of the media object. To be specific, as the duration of the media object varies, the control icon of the target control changes accordingly, and so on. Through the steps in this embodiment, as the media object played in the video playback interface changes, the control icon of the target control in the video playback interface changes accordingly.

Furthermore, the control icon of the target control is configured for representing a trigger result of a target control. To be specific, when a target control with a different control icon is triggered, the terminal device displays a different execution result. Specifically, after the terminal device receives and responds to a trigger operation for a target control, the content displayed in the first application switches from the video playback interface to the secondary operation interface, thereby performing the switching corresponding to the control icon. Meanwhile, since the control icon corresponds to the video feature of the media object, when the media object played in the video playback interface varies, in response to the target control being triggered, a different trigger result is produced, thereby switching to the first or second secondary operation interface.

The first secondary operation interface is configured for displaying a media player, the media player is configured to play audio content of the media object, in other words, the first secondary operation interface is a page configured for playing the audio content of the media object. The second secondary operation interface is configured for switching to a second application, and the second application is configured for acquiring background music or a video template of the media object, interface content of the secondary operation interface corresponds to the control icon, in other words, the second secondary operation interface is a page of a video editing entry point for implementing a video editing function.

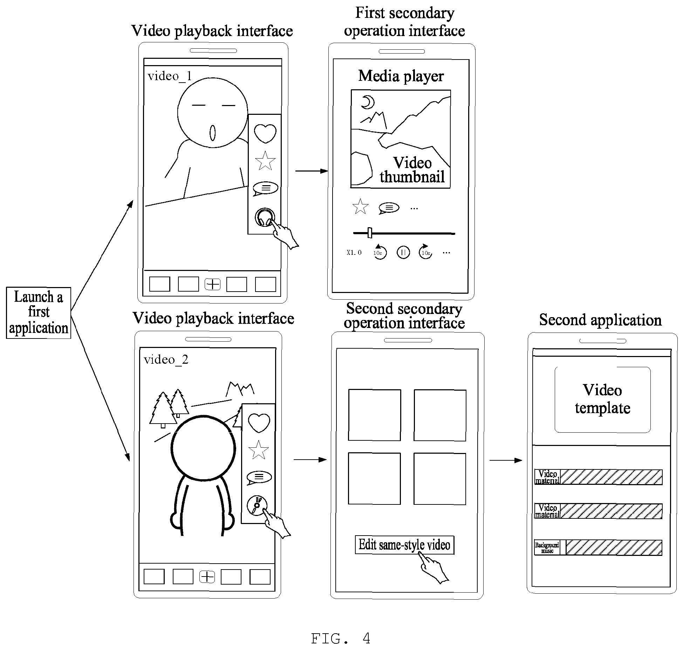

FIG. 4 is a schematic diagram of a process of triggering a target control according to an embodiment of the present disclosure. The above steps will be described below with reference to FIG. 4. As shown in FIG. 4, after a first application is started, the video playback interface of the first application includes a target control in addition to conventional function controls (reference may be made to the illustration in the application scenario diagram shown in FIG. 1), the appearance (that is, control icon) of the target control changes with the media object played in the current video playback window, for example, as shown in the figure, when a video video_1 is played, the control icon of the target control is a "Headphone"; and when a video video_2 is played, the control icon of the target control is an "Album". Subsequently, when a trigger operation is applied, for example, a target control is tapped, tapping of a target control of a different appearance would lead to switch to a corresponding secondary operation interface. For example, as shown in the figure, when video_1 is played, the user taps a "Headphone" control icon to cause switching to the first secondary operation interface. A media player is provided in the first secondary operation interface. The media player is configured to play the audio of video_1 without displaying video images thereof. In FIG. 4, only a video thumbnail of video_1 is displayed in the first secondary operation interface. When video_2 is played, the user taps an "Album" control icon to cause switching to a second secondary operation interface. A start control for starting the second application and corresponding descriptive information (the start control is labeled "Shoot a same-style video") are provided in the second secondary operation interface to guide the user to trigger the start control to cause switching to the second application. The second application can be, for example, a video editing application, a music application, and the like, and is used for acquiring background music, a video material, or a video template of the media object currently being played, thereby enabling functions such as video editing, video creation, and listening to background music in full.

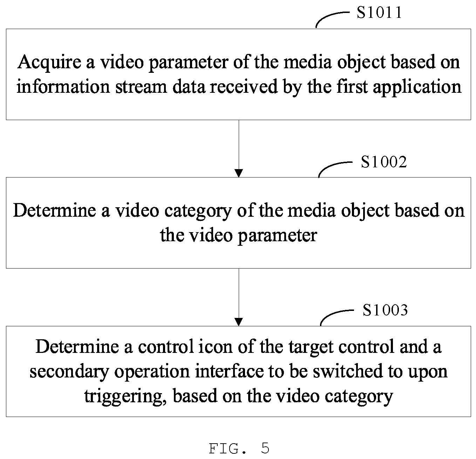

Further, in a possible implementation, as shown in FIG. 5, a specific implementation of determining the control icon of the target control and the secondary operation interface includes the following steps.

Step S1001: acquiring a video parameter of the media object based on information stream data received by the first application.

Step S1002: determining a video category of the media object based on the video parameter.

Step S1003: determining a control icon of the target control and a secondary operation interface to be switched to upon triggering, based on the video category.

As an example, in a feed-based video playback mode, an application (that is, the first application in this embodiment) obtains information stream data from a data server, and acquires a to-be-played media object from the information stream data. In this process, the information stream data further includes video parameters corresponding to the media object, for example, a video duration of the media object, a posting account of the media object, music identifier of background music used in the media object, and the like. The specific implementation of the video parameters contained in the information stream data may be set as required, without being limited herein. Subsequently, a corresponding video category is determined based on one or more video parameters in the information stream data. A mapping relationship between the video parameters and the video categories is pre-configured. Afterward, a control icon of the target control and a secondary operation interface to be switched to in response to a trigger operation for the target control can be determined based on the video category. Specifically, the video category includes a first video category and a second video category. When the video parameters satisfy a parameter condition corresponding to the first video category, it is determined that the media object belongs to the first video category. Accordingly, the control icon of the target control is a first control icon. Triggering the target control causes switching to the first secondary operation interface. When the video parameters satisfy a parameter condition corresponding to the second video category, it is determined that the media object belongs to the second video category. Accordingly, the control icon of the target control is a second control icon. Triggering the target control causes switching to the second secondary operation interface.

More specifically, for example, the video parameter includes a video duration of the media object. A specific implementation of determining a video category of the media object based on the video parameter includes the following steps.

Step S1002A-1: determining that the video category of the media object is the first video category, in response to the video duration being greater than a duration threshold.

Step S1002A-2: determining that the video category of the media object is the second video category, in response to the video duration being less than the duration threshold.

To be specific, if the video duration of the media object is greater than the duration threshold, for example, 3 minutes, it is determined that the video category of the media object is the first video category. When the media object of the first video category is played, the target control displays a first control icon. In response to a trigger operation for the target control, the video playback interface switches to the first secondary operation interface provided with a media player. Conversely, if the video duration of the media object is less than the duration threshold, it is determined that the video category of the media object is the second video category. When the media object of the second video category is played, the target control displays a second control icon. In response to a trigger operation for the target control, the video playback interface switches to the second secondary operation interface provided with a switching control. Triggering the switching control would cause switching to a second application to acquire background music or a video template of the media object.

In another possible implementation, the video parameters include video views and a traffic redirection efficiency of the media object, the traffic redirection efficiency represents the number of switching to the second application via the media object per unit time, another implementation of determining the video category of the media object may be as follows:

Step S1002B-1: determining that the video category of the media object is the first video category, in response to the video views being greater than a video views threshold and the traffic redirection efficiency being less than a traffic redirection efficiency threshold;

Step S1002B-2: determining that the video category of the media object is the second video category, in response to the video views being less than a video views threshold or the traffic redirection efficiency being greater than a traffic redirection efficiency threshold.

Among them, the video views mean the number of playbacks of the media object in a specified time range (for example, one day, or one week) in a specified service area (for example, A city area, B city area, or throughout the Internet), the traffic redirection efficiency means the number of times the second application is accessed through the video editing entry in a specified time range in specified service area. Specifically, for example, on a terminal device that runs the first application, after the media object video_1 is played by the first application, if the user, by triggering the target control in the video playback interface, cause to switch to the second secondary operation interface and in turn switch to the second application, then the service terminal of the first application counts it as one valid traffic redirection. The number of redirections produced by all terminal devices for the media object video_1 in a specified time range in a specified service area is counted to obtain a traffic redirection efficiency of the media object video_1, the traffic redirection efficiency is then recorded in the information stream data and distributed along with the media object video_1. This allows the terminal device to obtain the traffic redirection efficiency of the media object video_1. Accordingly, based on a relationship between the video views and a video views threshold as well as a relationship between the traffic redirection efficiency and a traffic redirection efficiency threshold, a first video category and a second video category are determined, and in turn a control icon of the target control and a secondary operation interface to be switched to in response to the target control being triggered.

Further, in still another possible implementation, the video parameters also include posting information, the posting information is used for representing a posting account of the media object or a music identifier of the background music of the media object. Another implementation of determining the video category of the media object may be as follows:

Step S1002C-1: determining that the video category of the media object is the second video category, in response to the posting account of the media object being a pre-configured target posting account and/or the music identifier of the background music of the media object being a pre-configured first music identifier.

Step S1002C-2: otherwise, determining that the video category of the media object is the first video category.

As an example, the posting information may include an account identifier of a posting account that posts the media object, when the account identifier is an account identifier in a preset account list, which indicates that the posting account is a pre-labeled target posting account not allowed for playing audio content, in this case, it is determined that the video category of the media object is the second video category, which means that only the second secondary operation interface can be switched to via the target control. On the other hand, the posting information may include a music identifier of the background music of the media object. As an example, if the media object is created and generated by a second application, then the second application records, in the video data of the media object, the music identifier of the background music of the media object, therefore, the terminal device simultaneously obtains the music identifier of the background music when playing the media object through the first application. Subsequently, similarly, when the music identifier is a pre-configured first music identifier, which indicates that the background music corresponding to the music identifier is not allowed to be played in audio form in the first application, in this case, it is determined that the video category of the media object is the second video category, which means that only the second secondary operation interface can be switched to via the target control. Conversely, if the posting information fails to meet the conditions of the target posting account or the target music identifier described above, it may be determined that the video category of the media object is the first video category.

In the steps of this embodiment, the media object can be determined as the first video category or the second video category based on the video features represented by different video parameters, in this way, dynamical displaying and dynamical triggering of the target control can be implemented in different dimensions, thereby reducing deployment of additional controls, improving interaction efficiency, and reducing operation complexity. Meanwhile, while the audio content of the media object can be played, it can avoid configuring an audio playback control which may causes damage to the video generation and consumption ecology and affects traffic redirection of the video editing entry.

In an embodiment of the present disclosure, a media object is played in the video playback interface based on the information stream in the first application, a target control is provided in the video playback interface, and the target control dynamically displays a corresponding control icon based on a video feature of the media object; a secondary operation interface of the first application is switched to, in response to a trigger operation for the target control, wherein the secondary operation interface includes at least a first secondary operation interface or a second secondary operation interface, the first secondary operation interface is configured for displaying a media player, the media player is configured to play audio content of the media object, the second secondary operation interface is configured for switching to the second application, the second application is configured for acquiring a background music or a video template of the media object, interface content of the secondary operation interface corresponds to the control icon. Through providing the target control capable of dynamically matching the video feature of the media object in the video playback interface based on the information stream, and switching to the corresponding secondary operation interface in response to the target control being triggered, so as to play the audio content of the media object, or acquire the background music or the video template of the media object, therefore, playing of the audio content of the media object can be implemented without affecting traffic redirection to the second application, thereby improving the transmission efficiency of information in a video, reducing power consumption of a terminal device, and improving user experience, in the video playback mode based on the information stream.

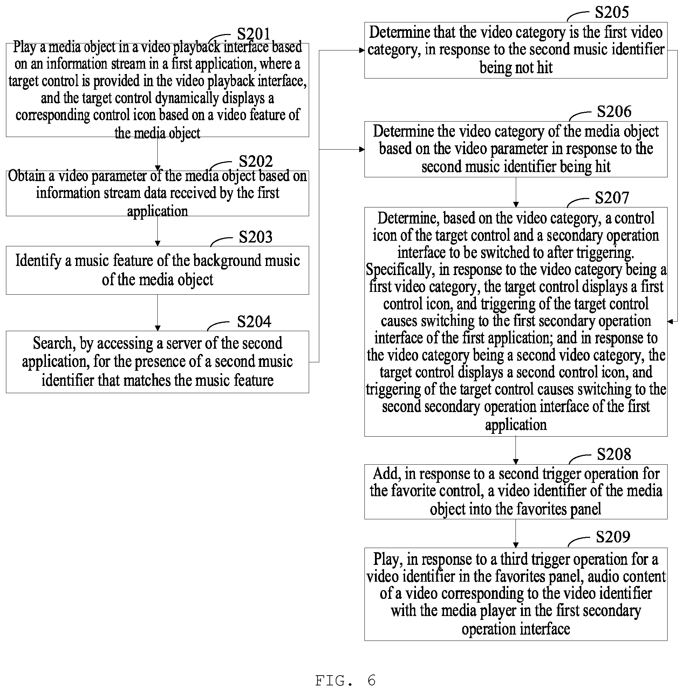

Reference is made to FIG. 6, FIG. 6 is a second schematic flowchart of an application interaction method according to an embodiment of the present disclosure. This embodiment further refines step S102 based on the embodiment shown in FIG. 2, the application interaction method includes the following steps.

Step S201: playing a media object in a video playback interface based on an information stream in a first application, where a target control is provided in the video playback interface, and the target control dynamically displays a corresponding control icon based on a video feature of the media object.

Step S202: acquiring a video parameter of the media object based on information stream data received by the first application.

Optionally, after step S202, the method further includes the following steps.

Step S203: identifying a music feature of a background music of the media object.

Step S204: searching, by accessing a server of a second application, for presence of a second music identifier that matches the music feature.

Step S205: determining that a video category is a first video category, in response to the second music identifier being not hit.

As an example, after the media object is acquired, the audio data of the media object is analyzed to identify the music feature of background music in the media object. In a possible implementation, the music identifier of the background music of the media object is recorded in the video parameter in the video data corresponding to the media object. Based on the video identifier, a request is sent to a server of the second application to perform retrieval based on the music identifier, so as to determine whether the same or similar music is stored in a music library of the second application, that is, whether the same or similar second music identifier exists. The music identifier may be a music title or a music identification code. In another possible implementation, the terminal device extracts audio features, such as a feature matrix or a feature vector, from the audio data of the media object. Subsequently, a search is performed at the server of the second application (that is, the music library corresponding to the second application) based on the audio features, so as to determine whether a second music identifier that matches the music features exists, where he target music indicated by the second music identifier exhibits the same or similar music features compared with the background music of the currently played media object. More specifically, for example, the target music indicated by the second music identifier is a song exactly same as the background music of the media object, or a song with the same title but different performers, or a song with the same title but different versions, or the like. Subsequently, if the searching at the server of the second application does not find a target song meeting the above requirements, that is, if the second music identifier is not hit, then in subsequent steps, it is not necessary to trigger the second secondary operation interface for acquiring background music of the media object, and it is determined that the video category is the first video category, thereby implementing prediction of an interaction operation result, avoiding occurrence of an invalid operations that the background song cannot be matched after switching to the second application, thereby improving interaction efficiency.

Step S206: determining the video category of the media object based on the video parameter, in response to the second music identifier being hit.

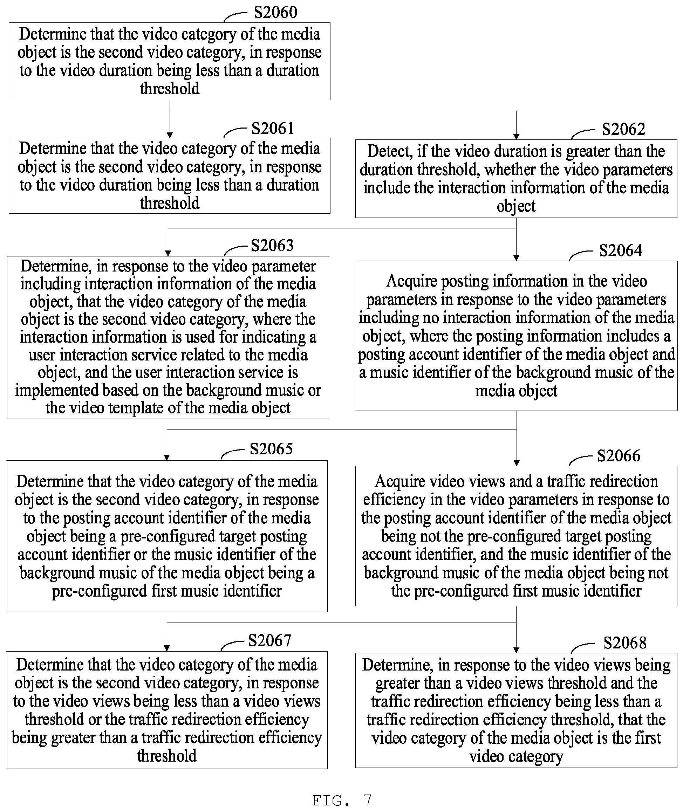

As an example, the video parameters of the media object include one or more of a video duration, video views, a traffic redirection efficiency, interaction information, or posting information. This embodiment will be described by using an example in which the video parameters include all the above parameters. However, in other possible implementations, one or more of the above video parameters may be used as a condition to determine the video category, which is not described here exhaustively by example. Specifically, as shown in FIG. 7, a specific implementation of step S206 includes the following steps.

Step S2060: acquiring a video duration and a duration threshold.

Step S2061: determining that the video category of the media object is the second video category, in response to the video duration being less than a duration threshold.

Step S2062: detect whether the video parameter include the interaction information of the media object, in response to the video duration being greater than the duration threshold.

Step S2063: determine that the video category of the media object is the second video category, in response to the video parameter including interaction information of the media object, where the interaction information is used for indicating a user interaction service related to the media object, and the user interaction service is implemented based on the background music or the video template of the media object.

Step S2064: in response to the video parameters including no interaction information of the media object, acquiring posting information in the video parameters, where the posting information includes a posting account identifier of the media object and a music identifier of the background music of the media object.

Step S2065: determining that the video category of the media object is the second video category, in response to the posting account identifier of the media object being a pre-configured target posting account identifier or the music identifier of the background music of the media object being a pre-configured first music identifier.

Step S2066: acquiring video views and a traffic redirection efficiency in the video parameters in response to the posting account identifier of the media object being not the pre-configured target posting account identifier, and the music identifier of the background music of the media object being not the pre-configured first music identifier.

Step S2067: determining that the video category of the media object is the second video category, in response to the video views being less than a video views threshold or the traffic redirection efficiency being greater than a traffic redirection efficiency threshold.

Step S2068: determining that the video category of the media object is the first video category, in response to the video views being greater than a video views threshold and the traffic redirection efficiency being less than a traffic redirection efficiency threshold.

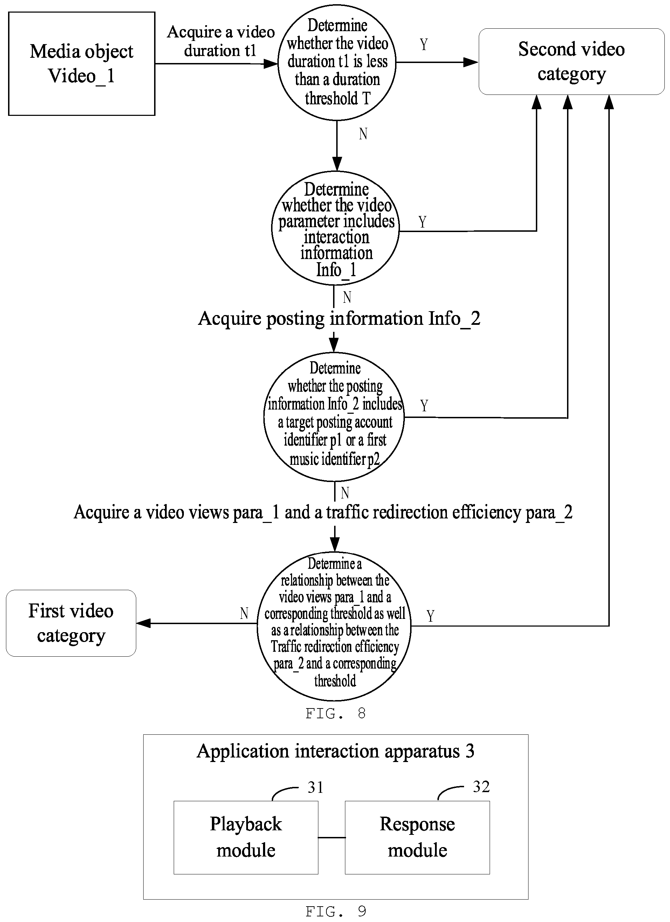

As an example, FIG. 8 is a schematic diagram of a process of determining a video category according to an embodiment of the present disclosure. The above steps will be described in detail below with reference to FIG. 8. As shown in FIG. 8, the terminal device first acquires a video duration t1 of a media object Video_1 through information stream data corresponding to the media object Video_1, and determines whether the video duration t1 is less than a duration threshold T. If the video duration t1 is less than the duration threshold T, then it is directly determined that the video category of the media object Video_1 is a second video category (Y path shown in the figure); otherwise (N path shown in the figure), it is determined whether the video parameters include interaction information Info_1. Furthermore, if the video parameters include the interaction information Info_1 (Y path shown in the figure), it is directly determined that the video category of the media object Video_1 is the second video category; otherwise (path N shown in the figure), posting information Info_2 in the video parameters is acquired, and it is determined whether the posting information Info_2 includes a preset target posting account identifier p1 or a first music identifier p2. If Info_2 includes the preset target posting account identifier p1 or the first music identifier p2 (Y path shown in the figure), it is directly determined that the video category of the media object Video_1 is the second video category; otherwise (N path shown in the figure), video views para_1 and a traffic redirection efficiency para_2 in the video parameters are acquired, and a relationship between the video views para_1 and a video views threshold as well as a relationship between the traffic redirection efficiency para_2 and a traffic redirection efficiency threshold are determined. If the video views para_1 is less than the video views threshold th_1 or the traffic redirection efficiency para_2 is greater than the traffic redirection efficiency threshold th_2 (Y path in the figure), it is determined that the video category of the media object is the second video category; otherwise, it is determined that the video category of the media object is the first video category (N path shown in the figure).

It should be noted that the interaction information is used for indicating a user interaction service related to the media object, for example, video imitation or a contest between users. In other words, if the above relevant content, such as the video imitation or contest, is provided in the media object, and the relevant content can only be implemented by accessing a second application (that is, the user interaction service is implemented based on background music or a video template of the media object in the second application), then it is determined that the video category of the media object is the second video category, thereby implementing the user interaction service corresponding to the media object, and improving compatibility with the service functions of the media object.

Step S207: determining, based on the video category, a control icon of the target control and a secondary operation interface to be switched to after triggering. Specifically, in response to the video category being a first video category, the target control displays a first control icon, and triggering of the target control causes switching to the first secondary operation interface of the first application; and in response to the video category being a second video category, the target control displays a second control icon, and triggering of the target control causes switching to the second secondary operation interface of the first application.

In a possible implementation, a favorite control and a favorites panel are provided in the first secondary operation interface. Optionally, the following steps are further included in this embodiment:

Step S208: adding, in response to a second trigger operation for the favorite control, a video identifier of the media object into the favorites panel;

Step S209: playing, in response to a third trigger operation for a video identifier in the favorites panel, audio content of a video corresponding to the video identifier with the media player in the first secondary operation interface.

As an example, upon the target control being triggered, the first secondary operation interface or the second secondary operation interface is switched to, among them, a switching control is provided in the second secondary operation interface to call up the second application so as to implement switching to the second application. Meanwhile, other content related to the media object, such as other videos posted by a poster of the media object or the like, may be provided in the second secondary operation interface. The specific implementation process may be set as required.

On the other hand, in the first secondary operation interface provided with a media player, a favorite control and a favorites panel are further provided, where the favorite control is configured for favoriting a currently played media object, the favorite panel is configured for displaying the favorited media object. Upon receiving a second trigger operation for the favorite control, the terminal device adds a video identifier (such as a video title) of the media object played in the video playback interface into the favorites panel to achieve the purpose of favoriting video resources. On the other hand, upon receiving a third trigger operation for the video identifier in the favorites panel, the terminal device directly plays the audio content of a video corresponding to the video identifier in the first secondary operation interface by using the media player, without a need to switch to the video playback interface. The above complete technical solution implements the favoriting and playback of the audio content of the media object in the information stream, reduces operation steps, and improves user operation efficiency.

In this embodiment, an implementation of step S201 is the same as that of step S101 in the embodiment shown in FIG. 2 in the present disclosure, and details are not described herein again.

Corresponding to the application interaction method in the above embodiment, FIG. 9 is a structural block diagram of an application interaction apparatus according to an embodiment of the present disclosure. The method described in the above embodiment may be performed by the application interaction apparatus. The apparatus may be implemented by software and/or hardware and may be integrated into an electronic device with a certain data processing function. The electronic device may include, but not limited to, a mobile terminal with a big data processing capability, and a fixed terminal with a big data processing capability such as a desktop computer and a supercomputer.

For ease of illustration, only parts related to this embodiment of the present disclosure are shown. Referring to FIG. 9, the application interaction apparatus 3 includes:
a playback module 31, configured to play a media object in a video playback interface based on an information stream in a first application, where a target control is provided in the video playback interface, and the target control dynamically displays a corresponding control icon based on a video feature of the media object; and
a response module 32, configured to cause switching to a secondary operation interface of the first application in response to a trigger operation for the target control, where the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object; interface content of the secondary operation interface corresponds to the control icon.

According to one or more embodiments of the present disclosure, the response module 32 is further configured to: acquire a video parameter of the media object based on information stream data received by the first application, and determine a video category of the media object based on the video parameter; wherein in response to the video category being a first video category, the target control displays a first control icon, and triggering of the target control causes switching to the first secondary operation interface of the first application; and in response to the video category being a second video category, the target control displays a second control icon, and triggering of the target control causes switching to the second secondary operation interface of the first application.

According to one or more embodiments of the present disclosure, the video parameter may include a video duration of the media object. To determine the video category of the media object based on the video parameter, the response module 32 is specifically configured to: determine that the video category of the media object is the first video category, or determine the video category of the media object based on at least one other video parameter, in response to the video duration being greater than a duration threshold; or determine that the video category of the media object is the second video category, in response to the video duration being less than a duration threshold.

According to one or more embodiments of the present disclosure, the video parameter may further include video views and a traffic redirection efficiency of the media object, among them, the traffic redirection efficiency represents a number of switching to the second application via the media object per unit time. To determine the video category of the media object based on at least one other video parameter, the response module 32 is specifically configured to: determine that the video category of the media object is the first video category, in response to the video views being greater than a video views threshold and the traffic redirection efficiency being less than a traffic redirection efficiency threshold; or determine that the video category of the media object is the second video category, in response to the video views being less than a video views threshold or the traffic redirection efficiency being greater than a traffic redirection efficiency threshold.

According to one or more embodiments of the present disclosure, to determine the video category of the media object based on at least one other video parameter, the response module 32 is specifically configured to: determine that the video category of the media object is the second video category, in response to the video parameter including interaction information of the media object, where the interaction information is used for indicating a user interaction service related to the media object, and the user interaction service is implemented based on the background music or the video template of the media object.

According to one or more embodiments of the present disclosure, the video parameter may further include posting information, where the posting information is used for representing a posting account of the media object, or a music identifier of the background music of the media object. To determine the video category of the media object based on the video parameter, the response module 32 is specifically configured to: determine that the video category of the media object is the second video category, based on the posting information, in response to the posting account of the media object being a pre-configured target posting account, and/or the music identifier of the background music of the media object being a pre-configured first music identifier.

According to one or more embodiments of the present disclosure, the response module 32 is further configured to: identify a music feature of the background music of the media object; and search for presence of a second music identifier that matches the music feature, by accessing a server of the second application. To determine the video category of the media object based on the video parameter, the response module 32 is specifically configured to: determine the video category of the media object based on the video parameter, in response to the second music identifier being hit; or determine that the video category is the first video category, in response to the second music identifier being not hit.

According to one or more embodiments of the present disclosure, a favorite control and a favorites panel are provided in the first secondary operation interface. The response module 32 is further configured to perform at least one of: adding a video identifier of the media object into the favorites panel, in response to a second trigger operation for the favorite control; or playing audio content of a video corresponding to the video identifier with the media player in the first secondary operation interface, in response to a third trigger operation for a video identifier in the favorites panel.

According to one or more embodiments of the present disclosure, after playing the media object in the video playback interface based on the information stream in the first application, the response module 32 is further configured to: add a corresponding highlight effect to the target control based on the video feature of the media object.

The playback module 31 is connected to the response module 32. The application interaction apparatus 3 provided in this embodiment may perform the technical solution of the above method embodiment, with similar implementation principles and technical effects. Details are not described in this embodiment again.

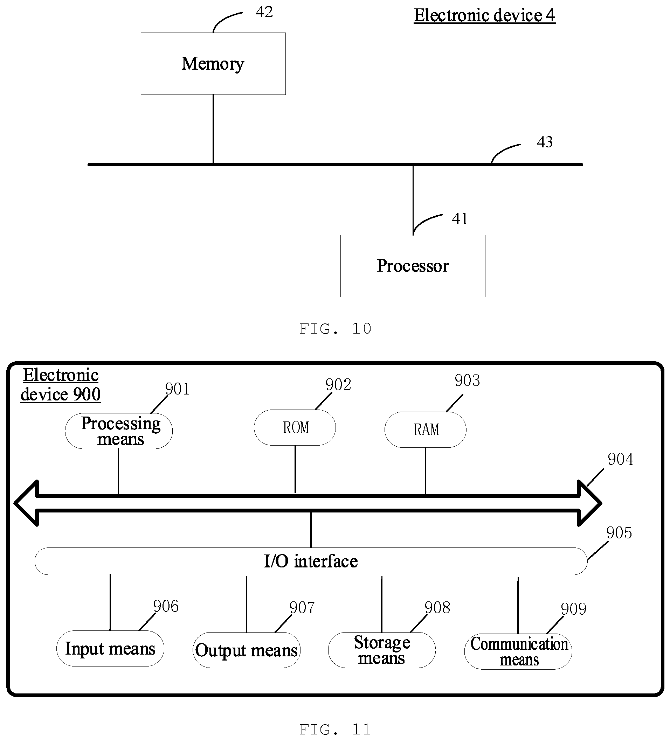

FIG. 10 is a schematic structural diagram of an electronic device according to an embodiment of the present disclosure. As shown in FIG. 10, the electronic device 4 includes:
a processor 41 and a memory 42 in communicatively connection with the processor 41.

The memory 42 stores computer-executable instructions.

The processor 41 executes the computer-executable instructions stored in the memory 42, to implement the application interaction method in the embodiments shown in FIG. 2 to FIG. 8.

Optionally, the processor 41 is connected to the memory 42 through a bus 43.

The related illustration may be understood with reference to related descriptions and effects that correspond to the steps in the embodiments corresponding to FIG. 2 to FIG. 8. Details are not repeated herein.

An embodiment of the present disclosure provides a computer-readable storage medium storing computer-executable instructions that, when executed by a processor, are configured to implement the application interaction method provided in any one of the embodiments corresponding to FIG. 2 to FIG. 8 in the present disclosure.

An embodiment of the present disclosure provides a computer program product including a computer program. When the computer program is executed by a processor, the application interaction method provided in any one of the embodiments corresponding to FIG. 2 to FIG. 8 is implemented.

In order to implement the above-mentioned embodiments, an embodiment of the present disclosure further provides an electronic device.

FIG. 11 is a schematic structural diagram of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer, a portable media player (PMP), and a vehicle-mounted terminal (such as a vehicle navigation terminal), and a fixed terminal such as a digital TV and a desktop computer. The electronic device shown in FIG. 11 is merely an example, and shall not impose any limitation on the function and scope of use of the embodiments of the present disclosure.

As shown in FIG. 11, the electronic device 900 may include a processing means (for example, a central processing unit or a graphics processing unit) 901 that may perform a variety of appropriate actions and processing based on a program stored in a read-only memory (ROM) 902 or a program loaded from a storage means 908 into a random-access memory (RAM) 903. The RAM 903 further stores various programs and data required for the operation of the electronic device 900. The processing means 901, the ROM 902, and the RAM 903 are connected to one another through a bus 904. An input/output (I/O) interface 905 is also connected to the bus 904.

Generally, the following apparatuses may be connected to the I/O interface 905: an input means 906 including, for example, a touchscreen, a touchpad, a keyboard, a mouse, a camera, a microphone, an accelerometer, and a gyroscope; an output means 907 including, for example, a liquid crystal display (LCD), a speaker, and a vibrator; the storage means 908 including, for example, a magnetic tape and a hard disk drive; and a communication means 909. The communication means 909 may allow the electronic device 900 to perform wireless or wired communication with other devices to exchange data. Although FIG. 11 shows the electronic device 900 having various means, it should be understood that it is not required to implement or have all of the shown means. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication means 909, installed from the storage means 908, or installed from the ROM 902. When the computer program is executed by the processing means 901, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units or modules described in the embodiments of the present disclosure may be implemented by software, or may be implemented by hardware. The name of the unit or module does not constitute a limitation on the unit itself under certain circumstances.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an application interaction method is provided. The method includes: playing a media object in a video playback interface based on an information stream in a first application, wherein a target control is provided in the video playback interface, and the target control dynamically displays a corresponding control icon based on a video feature of the media object; and switching to a secondary operation interface of the first application in response to a trigger operation for the target control, wherein the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for obtaining background music or a video template of the media object; interface content of the secondary operation interface corresponds to the control icon.

According to one or more embodiments of the present disclosure, the method further includes: acquiring a video parameter of the media object based on information data received by the first application, and determining a video category of the media object based on the video parameter; wherein in response to the video category being a first video category, the target control displays a first control icon, and the trigger operation for the target control causes switching to the first secondary operation interface of the first application; and wherein in response to the video category being a second video category, the target control displays a second control icon, and the trigger operation for the target control causes switching to the second secondary operation interface of the first application.

According to one or more embodiments of the present disclosure, the video parameter includes a video duration of the media object; the determining the video category of the media object based on the video parameter includes: determining that the video category of the media object is the first video category, or determining the video category of the media object based on at least one other video parameter, in response to the video duration being greater than a duration threshold; or determining that the video category of the media object is the second video category, in response to the video duration being less than a duration threshold.

According to one or more embodiments of the present disclosure, the video parameter further includes video views and a traffic redirection efficiency of the media object, wherein the traffic redirection efficiency represents a number of switching to the second application via the media object per unit time; the determining the video category of the media object based on at least one other video parameter includes: determining that the video category of the media object is the first video category, in response to the video views being greater than a video views threshold and the traffic redirection efficiency being less than a traffic redirection efficiency threshold; or determining that the video category of the media object is the second video category, in response to the video views being less than a video views threshold or the traffic redirection efficiency being greater than a traffic redirection efficiency threshold.

According to one or more embodiments of the present disclosure, the determining the video category of the media object based on at least one other video parameter includes: determining that the video category of the media object is the second video category, in response to the video parameter including interaction information of the media object, where the interaction information is used for indicating a user interaction service related to the media object, and the user interaction service is implemented based on the background music or the video template of the media object.

According to one or more embodiments of the present disclosure, the video parameter further includes posting information, the posting information is used for presenting a posting account of the media object, or a music identifier of the background music of the media object; the determining the video category of the media object based on the video parameter includes: based on the posting information, determining that the video category of the media object is the second video category, in response to the posting account of the media object being a pre-configured target posting account and/or the music identifier of the background music of the media object being a pre-configured first music identifier.

According to one or more embodiments of the present disclosure, the method further includes: identifying a music feature of the background music of the media object; and searching for presence of a second music identifier that matches the music feature by accessing a server of the second application, the determining the video category of the media object based on the video parameter includes: determining the video category of the media object based on the video parameter, in response to the second music identifier being hit; or determining that the video category is the first video category, in response to the second music identifier being not hit.

According to one or more embodiments of the present disclosure, a favorite control and a favorites panel are provided in the first secondary operation interface; the method further includes at least one of: adding a video identifier of the media object into the favorites panel, in response to a second trigger operation for the favorite control; or playing audio content of a video corresponding to a video identifier in the favorites panel with the media player in the first secondary operation interface, in response to a third trigger operation for the video identifier.

According to one or more embodiments of the present disclosure, after playing the media object in the video playback interface based on the information stream in the first application, the method further includes: adding a corresponding highlight effect to the target control based on the video feature of the media object.

In a second aspect, according to one or more embodiments of the present disclosure, an application interaction apparatus is provided, the apparatus includes:
a playback module, configured to play a media object in a video playback interface based on an information stream in a first application, wherein a target control is provided in the video playback interface, and the target control dynamically displays a corresponding control icon based on a video feature of the media object; and
a response module, configured to cause switching to a secondary operation interface of the first application in response to a trigger operation for the target control, wherein the secondary operation interface includes at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object; interface content of the secondary operation interface corresponds to the control icon.

According to one or more embodiments of the present disclosure, the response module is further configured to: acquire a video parameter of the media object based on information stream data received by the first application, and determine a video category of the media object based on the video parameter; wherein in response to the video category being a first video category, the target control displays a first control icon, and the trigger operation for the target control causes switching to the first secondary operation interface of the first application; and in response to the video category being a second video category, the target control displays a second control icon, and the trigger operation for the target control causes switching to the second secondary operation interface of the first application.

According to one or more embodiments of the present disclosure, the video parameter may include a video duration of the media object. To determine the video category of the media object based on the video parameter, the response module is specifically configured to: determine that the video category of the media object is the first video category, or determine the video category of the media object based on at least one other video parameter, in response to the video duration being greater than a duration threshold; or determine that the video category of the media object is the second video category, in response to the video duration being less than a duration threshold.

According to one or more embodiments of the present disclosure, the video parameter may further include video views and a traffic redirection efficiency of the media object, among them, the traffic redirection efficiency represents a number of switching to the second application via the media object per unit time. To determine the video category of the media object based on at least one other video parameter, the response module is specifically configured to: determine that the video category of the media object is the first video category, in response to the video views being greater than a video views threshold and the traffic redirection efficiency being less than a traffic redirection efficiency threshold; or determine that the video category of the media object is the second video category, in response to the video views being less than a video views threshold or the traffic redirection efficiency being greater than a traffic redirection efficiency threshold.

According to one or more embodiments of the present disclosure, to determine the video category of the media object based on at least one other video parameter, the response module is specifically configured to: determine that the video category of the media object is the second video category, in response to the video parameter including interaction information of the media object, where the interaction information is used for indicating a user interaction service related to the media object, and the user interaction service is implemented based on the background music or the video template of the media object.

According to one or more embodiments of the present disclosure, the video parameter may further include posting information, where the posting information is used for representing a posting account of the media object, or a music identifier of the background music of the media object. To determine the video category of the media object based on the video parameter, the response module is specifically configured to: determine that the video category of the media object is the second video category, based on the posting information, in response to the posting account of the media object being a pre-configured target posting account, and/or the music identifier of the background music of the media object being a pre-configured first music identifier.

According to one or more embodiments of the present disclosure, the response module is further configured to: identify a music feature of the background music of the media object; and search for presence of a second music identifier that matches the music feature, by accessing a server of the second application. To determine the video category of the media object based on the video parameter, the response module is specifically configured to: determine the video category of the media object based on the video parameter, in response to the second music identifier being hit; or determine that the video category is the first video category, in response to the second music identifier being not hit.

According to one or more embodiments of the present disclosure, a favorite control and a favorites panel are provided in the first secondary operation interface. The response module is further configured to perform at least one of: adding a video identifier of the media object into the favorites panel, in response to a second trigger operation for the favorite control; or playing audio content of a video corresponding to the video identifier in the favorites panel with the media player in the first secondary operation interface, in response to a third trigger operation for a video identifier.

According to one or more embodiments of the present disclosure, after playing the media object in the video playback interface based on the information stream in the first application, the response module is further configured to: add a corresponding highlight effect to the target control based on the video feature of the media object.

In a third aspect, according to one or more embodiments of the present disclosure, an electronic device is provided. The electronic device includes: at least one processor and a memory.

The memory stores computer-executable instructions.

The at least one processor executes the computer-executable instructions stored in the memory, to cause the at least one processor to perform the application interaction method according to the first aspect and various possible designs of the first aspect.

In a fourth aspect, according to one or more embodiments of the present disclosure, a computer-readable storage medium is provided. The computer-readable storage medium stores computer-executable instructions that, when executed by a processor, cause the application interaction method according to the first aspect and various possible designs of the first aspect to be implemented.

In a fifth aspect, according to one or more embodiments of the present disclosure, there is provided a computer program product including a computer program. When the computer program is executed by a processor, the application interaction method according to the first aspect and various possible designs of the first aspect is implemented.

The above descriptions are merely preferred embodiments of the present disclosure and explanations of the applied technical principles. Those skilled in the art should understand that the scope of disclosure related to the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls in the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An application interaction method, comprising:
playing a media object in a video playback interface based on an information stream in a first application, wherein a target control is provided in the video playback interface, and the target control dynamically displays a corresponding control icon based on a video feature of the media object; and
switching to a secondary operation interface of the first application in response to a trigger operation for the target control, wherein the secondary operation interface comprises at least a first secondary operation interface or a second secondary operation interface, the first secondary operation interface is configured for displaying a media player, the media player being configured for playing audio content of the media object, and the second secondary operation interface is configured for switching to a second application, the second application being configured for obtaining background music or a video template of the media object; interface content of the secondary operation interface corresponds to the control icon.

2. The method according to claim 1, further comprising:
acquiring a video parameter of the media object based on information data received by the first application, and determining a video category of the media object based on the video parameter;
wherein in response to the video category being a first video category, the target control displays a first control icon, and the trigger operation for the target control causes switching to the first secondary operation interface of the first application; and
wherein in response to the video category being a second video category, the target control displays a second control icon, and the trigger operation for the target control causes switching to the second secondary operation interface of the first application.

3. The method according to claim 2, wherein the video parameter comprises a video duration of the media object; the determining the video category of the media object based on the video parameter comprises:
determining that the video category of the media object is the first video category, or determining the video category of the media object based on at least one other video parameter, in response to the video duration being greater than a duration threshold; or
determining that the video category of the media object is the second video category, in response to the video duration being less than a duration threshold.

4. The method according to claim 3, wherein the video parameter further comprises video views and a traffic redirection efficiency of the media object, wherein the traffic redirection efficiency represents a number of switching to the second application via the media object per unit time;
the determining the video category of the media object based on at least one other video parameter comprises:
determining that the video category of the media object is the first video category, in response to the video views being greater than a video views threshold and the traffic redirection efficiency being less than a traffic redirection efficiency threshold; or
determining that the video category of the media object is the second video category, in response to the video views being less than a video views threshold or the traffic redirection efficiency being greater than a traffic redirection efficiency threshold.

5. The method according to claim 3, wherein the determining the video category of the media object based on at least one other video parameter comprises:
determining that the video category of the media object is the second video category, in response to the video parameter comprising interaction information of the media object, where the interaction information is used for indicating a user interaction service related to the media object, and the user interaction service is implemented based on the background music or the video template of the media object.

6. The method according to claim 2, wherein the video parameter further comprises posting information, the posting information is used for presenting a posting account of the media object, or a music identifier of the background music of the media object;
the determining the video category of the media object based on the video parameter comprises:
based on the posting information, determining that the video category of the media object is the second video category, in response to the posting account of the media object being a pre-configured target posting account and/or the music identifier of the background music of the media object being a pre-configured first music identifier.

7. The method according to claim 2, further comprising:
identifying a music feature of the background music of the media object; and
searching for presence of a second music identifier that matches the music feature by accessing a server of the second application,
the determining the video category of the media object based on the video parameter comprises:
determining the video category of the media object based on the video parameter, in response to the second music identifier being hit; or
determining that the video category is the first video category, in response to the second music identifier being not hit.

8. The method according to claim 1, wherein a favorite control and a favorites panel are provided in the first secondary operation interface;
the method further comprises at least one of:
adding a video identifier of the media object into the favorites panel, in response to a second trigger operation for the favorite control; or
playing audio content of a video corresponding to a video identifier in the favorites panel with the media player in the first secondary operation interface, in response to a third trigger operation for the video identifier.

9. The method according to claim 1, wherein after playing the media object in the video playback interface based on the information stream in the first application, the method further comprises:
adding a corresponding highlight effect to the target control based on the video feature of the media object.

10. An application interaction apparatus, comprising:
a playback module, configured to play a media object in a video playback interface based on an information stream in a first application, wherein a target control is provided in the video playback interface, and the target control dynamically displays a corresponding control icon based on a video feature of the media object; and
a response module, configured to cause switching to a secondary operation interface of the first application in response to a trigger operation for the target control, wherein the secondary operation interface comprises at least a first secondary operation interface or a second secondary operation interface, the first secondary operation interface is configured for displaying a media player, the media player being configured for playing audio content of the media object, and the second secondary operation interface is configured for switching to a second application, the second application being configured for acquiring background music or a video template of the media object; interface content of the secondary operation interface corresponds to the control icon.

11. The apparatus according to claim 10, wherein, the response module is further configured to:
acquire a video parameter of the media object based on information data received by the first application, and determining a video category of the media object based on the video parameter;
wherein in response to the video category being a first video category, the target control displays a first control icon, and the trigger operation for the target control causes switching to the first secondary operation interface of the first application; and
wherein in response to the video category being a second video category, the target control displays a second control icon, and the trigger operation for the target control causes switching to the second secondary operation interface of the first application.

12. The apparatus according to claim 11, wherein in response to the video parameter comprising a video duration of the media object, the response module is further configured to:
determine that the video category of the media object is the first video category, or determining the video category of the media object based on at least one other video parameter, in response to the video duration being greater than a duration threshold; or determine that the video category of the media object is the second video category, in response to the video duration being less than a duration threshold, and/or
in response to the video parameter comprising posting information, wherein the posting information is used for presenting a posting account of the media object, or a music identifier of the background music of the media object, the response module is further configured to, based on the posting information, determine that the video category of the media object is the second video category, in response to the posting account of the media object being a pre-configured target posting account and/or the music identifier of the background music of the media object being a pre-configured first music identifier.

13. An electronic device, comprising: a processor and a memory, wherein
the memory stores computer-executable instructions; and
the processor executes the computer-executable instructions stored in the memory, to cause the processor to perform the application interaction method according to any one of claims 1 to 9.

14. A computer-readable storage medium, having computer-executable instructions stored therein that, when executed by a processor, cause the application interaction method according to any one of claims 1 to 9 to be implemented.

15. A computer program product, comprising a computer program, wherein the computer program, when executed by a processor, causes the application interaction method according to any one of claims 1 to 9 to be implemented.
